# EUROPEAN PATENT APPLICATION

(11) **EP 1 491 584 A1**
(43) Date of publication of application: **29.12.2004**
(21) Application number: 03715475.4
(22) Date of filing: 27.03.2003
(51) Int. Cl.: C08L 25/06, C08L 51/04, C08F 279/02

(54) **IMPACT-RESISTANT THERMOPLASTIC RESIN COMPOSITION**

(30) Priority: 29.03.2002 JP 2002097705
(71) Applicant: KANEKA CORPORATION, Osaka-shi, Osaka 530-8288 (JP)
(72) Inventor: YAMAGUCHI, Katsumi, Tarumi-ku, Kobe-shi, Hyogo 655-0039 (JP); KADOKURA, Mamoru, Himeji-shi, Hyogo 671-1242 (JP)
(74) Representative: VOSSIUS & PARTNER
(86) International application number: PCT/JP2003/003793
(87) International publication number: WO 2003/082973

(57) **Abstract**

An aromatic vinyl resin composition which is transparent and has impact resistance. It is an impact-resistant thermoplastic resin composition comprising (A) 5 to 50 parts by weight of a graft copolymer and (B) 95 to 50 parts by weight of a thermoplastic resin comprising an aromatic vinyl polymer having a syndiotactic structure, wherein the graft copolymer (A) is one obtained by polymerizing 60 to 15 wt% monomer mixture (d) comprising 20 to 100 wt.% aromatic vinyl monomer in the presence of 40 to 85 wt.% latex-fotm rubber particles (c) having an average particle diameter of 3,000 to 20,000 Å obtained by aggregating and enlarging latex-form rubber particles (a) having an average particle diameter of 3,000 Å or smaller by adding thereto 0.1 to 15 parts by weight (on solid basis) of an acid-group-containing copolymer latex (b) obtained by polymerizing a monomer mixture comprising 5 to 25 wt.% unsaturated carboxylic acid and 95 to 75 wt.% monomer copolymerizable with the unsaturated carboxylic acid, per 100 parts by weight (on solid basis) of the particles (a).

## Description

### TECHNICAL FIELD

The present invention relates to transparent impact-resistant thermoplastic resin compositions. More specifically, the invention pertains to resin compositions imparted with impact resistance without impairing excellent heat resistance and dynamic properties inherent to a syndiotactic aromatic vinyl polymer and having excellent balance among rigidity, heat resistance, impact resistance and workability. The resin compositions of the invention are suited for use in a variety of applications such as automobile parts and parts for various electronic devices.

### BACKGROUND ART

Aromatic vinyl resins are having a major volume in thermoplastic resin market and which have been used for various applications. Of the aromatic vinyl resins, syndiotactic aromatic vinyl resins are engineering plastics having crystallizabilitybased on the tacticity of their polymer chain, and having excellent heat resistance and rigidity attributable to their crystal structure , in addition to various excellent properties of the aromatic vinyl resins. Their impact resistance however does not reach a level satisfying the demand of the market. Various measures have been taken to improve their impact resistance.

For example, in Japanese Patent No. 2092170, a technique for improving impact resistance of a syndiotactic aromatic vinyl resin by mixing it with an elastomeric material is disclosed. In Japanese Patent No. 3080752 or Japanese Patent Application Laid-Open No. Hei 7-48487, disclosed is a technique of using a syndiotactic polystyrene resin in combination with a specific polymer having a reactive group and a elastmeric material, and if necessary, a component such as compatibilizing agent. The above-described methods are however not convenient because they need a lot of control of processing condition or adjustment in their formulations. In addition, they involve such drawbacks that an increase in the using amount of rubber components tends to cause deterioration in properties such as modulus or rigidity, resulting in limitation in the using amount of rubber components or undergo fluctuations in the dispersion state of the rubber components according to the processing conditions.

In Japanese Patent No. 2683035, it is described that impact resistance is improved by adding a so-called core-shell type graft copolymer such as methyl methacrylate - acryl - styrene (MAS) resin or acrylonitrile - butadiene - styrene (ABS) resin available by emulsion polymerization of a copolymerizable vinyl monomer in the presence of rubber components such as poly butyl acrylate or polybutadiene. Although the range of a particle size upon addition of these graft copolymers is disclosed, no specific disclosure is made about a method of adjustment to a suitable particle size or formulations for the impact resistance improvement. Therefore it is still inadequate for improving the impact resistance up to a practically sufficient level.

An object of the present invention is to provide an impact-resistant syndiotactic aromatic vinyl resin composition imparted with impact resistance onto an aromatic vinyl resin having a syndiotactic structure without losing heat resistance of the resin.

### DISCLOSURE OF THE INVENTION

In the present invention, a graft copolymer prepared by a specific rubber particle swelling method and having a predetermined particle size is added to a syndiotactic aromatic vinyl polymer to effectively improve impact resistance thereof without causing drastic deterioration in its heat resistance.

In the present invention, there is thus provided an impact-resistant thermoplastic resin composition comprising from 5 to 50 parts by weight of (A) a graft copolymer and from 95 to 50 parts by weight of (B) a thermoplastic resin containing an aromatic vinyl polymer having a syndiotactic structure,
the graft copolymer (A) being obtained by polymerizing from 60 to 15 wt.% of (d) a monomer mixture containing 20 to 100 wt.% of an aromatic vinyl monomer in the presence of from 40 to 85 wt.% of (c) latex-form rubber particles (agglomerated rubber particles) having an average particle size of from 3000 to 20000 Å obtained by agglomerating(a) latex-form rubber particles having an average particle size not greater than 3000 Å by adding thereto from 0.1 to 15 parts by weight (on solid basis) of (b) an acid-group-containing copolymer latex obtained by polymerizing a monomer mixture composed of from 5 to 25 wt.% of an unsaturated carboxylic acid and from 95 to 75 wt.% of a monomer copolymerizable therewith, per 100 parts by weight (on solid basis) of the particles (a).

The latex-form rubber particles (a) having an average particle size not greater than 3000 Å are preferably latex-form rubber particles having an average particle size of from 500 to 3000 Å obtained by polymerizing a monomer mixture containing from 50 to 100 wt.% of at least one monomer selected from the group consisting of conjugated diene monomers and acrylate esters having a C₁₋₁₂ organic group.

The acid-group-containing copolymer latex (b) is preferably available by copolymerizing from 5 to 25 wt.% of at least one unsaturated carboxylic acid selected from the group consisting of acrylic acid, methacrylic acid, itaconic acid and crotonic acid and from 95 to 75 wt.% of a monomer copolymerizable with the unsaturated carboxylic acid.

The monomer copolymerizable with the unsaturated carboxylic acid of the acid-group-containing copolymer latex (b) preferably contains from 5 to 30 wt.% of an alkyl acrylate having a C₁₋₁₂ alkyl group, from 20 to 80 wt.% of an alkyl methacrylate having a C₁₋₁₂ alkyl group and from 0 to 40 wt.% of another vinyl monomer.

The acid-group-containing copolymer latex (b) is preferably obtained by not polymerizing the whole amount of the monomer mixture in one step, but first polymerizing from 5 to 90 wt.% of a monomer mixture (b-1) having a low unsaturated carboxylic acid content and then polymerizing from 95 to 10 wt.% of (b-2) a monomer mixture having a high unsaturated carboxylic acid content.

The monomer mixture (d) to be polymerized in the presence of the latex-form rubber particles (c) is preferably composed of from 40 to 99 wt.% of an aromatic vinyl monomer and from 1 to 60 wt.% of at least one monomer selected from (meth) acrylate esters and vinyl cyanides.

The thermoplastic resin (B) is preferably a thermoplastic resin containing polystyrene having a syndiotactic structure.

In the present invention, there is also provided an impact-resistant thermoplastic resin composition obtained by adding, to 100 parts by weight of the above-described impact-resistant thermoplastic resin composition, from 0.01 to 100 parts by weight of at least one additive selected from the group consisting of inorganic fillers, nucleating agents, antioxidants, flame retardants, antistatics, lubricants and pigments.

### BEST MODE FOR CARRYING OUT THE INVENTION

### <Graft Copolymer (A)>

In the invention, latex-form rubber particles (a) having an average particle size not greater than 3000 Å, preferably from 500 to 3000 Å, more preferably from 500 to 2500 Å, still more preferably from 500 to 2000 Å are used as a rubber component. Within the above-described range, strength improving effects tend to become higher.

Although no particular limitation is imposed on the kind of the rubber component, that obtained by copolymerizing a monomer mixture composed of from 50 to 100 wt.% of at least one monomer selected from the group consisting of conjugated diene monomers and acrylate esters having a C₁₋₁₂ organic group, from 0 to 50 wt.% of a copolymerizable vinyl monomer, from 0 to 3 wt.% of a crosslinkable monomer and from 0 to 3 wt.% of a chain transfer agent is preferred.

Typical examples of the conj ugated diene monomers include butadiene and a variety of substituted butadienes such as isoprene and chloroprene. Examples of the acrylate esters having a C₁₋₁₂ organic group include methyl acrylate, ethyl acrylate, propyl acrylate, butyl acrylate,' 2-ethylhexyl acrylate, dodecyl acrylate, benzyl acrylate and 4-hydroxybutyl acrylate. Of these, acrylate esters having a C₁₋₁₂ organic group are preferred. The number of carbon atoms of the organic group exceeding 12 retards the polymerization rate, which tends to suppress an increase in the polymerization conversion ratio. Suchmonomer is used in an amount of from 50 to 100 wt.%, preferably from 70 to 100 wt.%. Amounts less than 50 wt.% lower the performance as the rubber, which tends to deteriorate impact resistance of the final product. These monomers may be used either singly or in combination of two or more of them.

Examples of the copolymerizable vinyl monomer include vinyl monomers having an aromatic ring such as styrene, vinyltoluene, vinylnaphthalene, α-methylstyrene; methacrylate esters such as methyl methacrylate, ethyl methacrylate, propyl methacrylate and butyl methacrylate; and vinyl cyanides such as acrylonitrile and methacrylonitrile. These vinyl monomers may be used either singly or in combination of two or more of them. These monomers may be used in an amount of from 0 to 50 wt.%, preferably from 0 to 30 wt.%. Amounts exceeding 50 wt.% lower the performance as the rubber, which tends to deteriorate the impact resistance of the final product.

Examples of the crosslinkable monomer which can be used for the preparation of the rubber component include compounds having, in the molecule thereof, two or more polymerizable functional groups such as allyl methacrylate, divinylbenzene, diallyl phthalate and ethylene glycol dimethacrylate. Examples of the chain transfer agent usable in the invention include n-dodecyl mercaptan and t-dodecyl mercaptan. The crosslinkable monomer and chain transfer agent are used if necessary and they are preferably added, each in an amount of from 0 to 3 wt.%, especially preferably from 0 to 1.5 wt.%. Amounts exceeding 3 wt.% tend to deteriorate the impact resistance of the final product.

Latex-form agglomerated rubber particles (c) are obtained by agglomerating latex-form rubber particles (a) prepared using the above-described monomers by adding, to the particles (a), an acid-group-containing copolymer, preferably a latex-form acid-group-containing copolymer, obtained by copolymerizing a monomer mixture composed of an unsaturated carboxylic acid and a monomer copolymerizable therewith. The latex-form agglomerated rubber particles (c) thus obtained have an average particle size of from 3000 to 20000 Å, preferably from 3200 to 18000 Å, more preferably from 3500 to 15000 Å. At average particle sizes less than 3000 Å, effects for improving the impact resistance of the syndiotactic aromatic vinyl polymer tend to be inadequate. In addition, elongation becomes insufficient even upon low speed deformation and a yield point is lost. Thus; shortage in latent strength tends to occur. At average particle sizes exceeding 20000 Å, the stability of the latex lowers, which tends to cause collapse of the latex during preparation, resulting in the formation of a large number of coagula.

With regards to the acid-group-containing copolymer latex (b) to be used for agglomerating rubber particles, the acid-group-containing copolymer is available by the copolymerization of from 5 to 25 wt.% of an unsaturated carboxylic acid and from 95 to 75 wt.% of a monomer copolymerizable therewith, and the copolymer is preferably used as in the latex form. Preferably, the acid-group-containing copolymer is obtained by polymerizing a monomermixture composed of from 5 to 25 wt.% of at least one unsaturated carboxylic acid selected from the group consisting of acrylic acid, methacrylic acid, itaconic acid and crotonic acid, from 5 to 30 wt.% of at least one alkyl acrylate having a C₁₋₁₂ alkyl group, from 20 to 80 wt.% of at least one alkyl methacrylate having a C₁₋₁₂ alkyl group, and from 0 to 40 wt.% of a monomer having a vinyl unsaturated bond copolymerizable with these monomers.

As the unsaturated carboxylic acid to be used here, acrylic acid or methacrylic acid or a mixture thereof is preferred from the viewpoint of practical use. The unsaturated carboxylic acid is used in an amount of from 5 to 25 wt.%, more preferably from 10 to 25 wt.%. At amounts less than 5 wt.%, the swelling capacity tends to lower. Amounts exceeding 25 wt.%, on the other hand, tend to lead to formation of a large amount of coagula or viscosity increase of the latex.

As the alkyl acrylate, acrylate esters having a C₁₋₁₂ alkyl group can be used. Examples include methyl acrylate, ethyl acrylate, propyl acrylate and butyl acrylate. Of these, those having a C₁₋₈ alkyl group are especially preferred. When the number of carbon atoms of the alkyl group exceeds 12, the polymerization rate tends to become slower, and tends to be insufficient polymerization conversion ratio. These alkyl acrylates may be used either singly or in combination of two or more of them. The alkyl acrylate may be used in an amount of from 5 to 30 wt.%, preferably from 10 to 30 wt.%. Amounts less than 5% tend to lower the agglomerating capacity, while those exceeding 30 wt.% tend to increase the amount of coagula upon preparation of the acid-group-containing copolymer latex.

The alkyl methacrylate is an ester of methacrylic acid and an alcohol having a C₁₋₁₂ straight chain or branched chain. Examples of it include methyl methacrylate, ethyl methacrylate, propyl methacrylate and butyl methacrylate. Of these, alkyl methacrylates having a C₁₋₈ alkyl group are preferred. When the number of carbon atoms of the alkyl group exceeds 12, the polymerization rate tends to become slower, and tends to be insufficient polymerization conversion ratio. These alkyl methacrylates may be used either singly or in combination of two or more of them. The alkyl acrylate may be used in an amount of from 20 to 80 wt.%, preferably from 25 to 7.5 wt. %. At amounts outside the above-described range, the agglomerating capacity tends to lower.

Examples of the vinyl monomer copolymerizable with these monomers include aromatic vinyl monomers such as styrene and α-methylstyrene, vinyl cyanide monomers such as acrylonitrile and methacrylonitrile, and monomers having, in the molecule thereof, at least two polymerizable functional groups, such as allyl methacrylate and polyethylene glycol dimethyacrylate. They may be used either singly or in combination of two or more. These copolymerizable vinyl monomers may be used in an amount of from 0 to 40 wt.%, preferably from 0 to 35 wt.%. Amounts exceeding 40 wt.% tend to lower the agglomerating capacity.

In addition, from 0 to 3 wt.% of a chain transfer agent such as n-dodecyl mercaptan or t-dodecyl mercaptan can be used as needed. When the amount of the chain transfer agent exceeds 3 wt.%, the agglomerating capacity of the acid-group-containing polymer latex lowers or stability of the latex upon agglomeration lowers, or tending to increase the amount of coagula.

From the viewpoint of attaining higher agglomerating capacity, upon polymerization of the above-described monomer mixture (100 wt.% in total) to obtain the acid-group-containing copolymer latex (b), it is preferred to polymerize at first, from 5 to 90 wt.%, preferably from 10 to 70 wt.% of a monomer mixture (b-1) having a low unsaturated carboxylic acid content, and then polymerizing from 95 to 10 wt.%, preferably from 90 to 30 wt.% (the remaining portion of the monomer mixture) of the monomer mixture (b-2) having a high unsaturated carboxylic acid content. The term "low unsaturated carboxylic acid content" as used hereinmeans that the content of the unsaturated carboxylic acid monomer in the monomer mixture (b-1) is lower than that in the monomer mixture (b-2) . The term "high unsaturated carboxylic acid content" as used herein means that the content of the unsaturated carboxylic acid monomer in the monomer mixture (b-2) is higher than that in the monomer mixture (b-1). In view of the agglomerating capacity, it is preferred to conduct polymerization while adjusting the weight ratio α/β of the unsaturated carboxylic acid monomer content α in the monomermixture (b-1) to the unsaturated carboxylic acid monomer content β in the monomer mixture (b-2) to fall within a range of from 0 to 0.75. The ratio α/β falling within a range of from 0 to 0.5 is especially preferred. When the monomer mixture (b-2) having a high unsaturated carboxylic acid content is polymerized, the unsaturated carboxylic acid content β in the monomer mixture (b-2) is preferably 10 wt.% or greater, especially preferably 15 wt.% or greater, from the viewpoint of agglomerating capacity.

An average particle size of the acid-group-containing copolymer latex (b) is preferably from 500 to 3000 Å, more preferably from 700 to 2000 Å. At the particle size less than 500 Å, the agglomerating capacity tends to be insufficient, while at the particle size exceeding 3000 Å, non-agglomerated particles increases in the rubber particles after agglomeration process, tending to induce quality deterioration.

After agglomerating by the acid-group-containing copolymer latex (b), ( 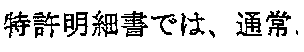 "range" 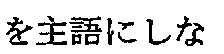 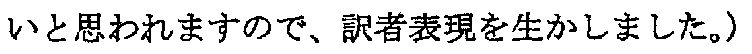 the latex-form rubber component (a) has an average particle size in the range of from 3000 to 20000 Å, preferably from 3000 to 10000 Å, more preferably from 3500 to 9000 Å. When the average particle size of the agglomerated rubber particles (c) is less than 3000 Å, impact resistance of the final product tends to decrease. When it exceeds 20000 Å, on the other hand, the stability of the latex upon agglomeration or graft polymerization may be deteriorated and thereby the amount of the coagula tends to increase.

The acid-group-containing copolymer latex (b) may be used in an amount of from 0.1 to 15 parts by weight on solid basis, based on 100 parts by weight of the latex-form rubber particles (a) before agglomeration. With less than 0.1 parts by weight, non-agglomerated rubber particles may be increased, tending to fail to agglomerate the particles into the desired average particle size. When the amounts exceed 15 parts by weight, it may become difficult to control the average particle size and tend to deteriorate the physical properties of the final product. Preferably, the amount of (b) from 0.5 to 5 parts by weight is suited for practical use, because the amounts within this range lead to a decrease in a ratio of the non-agglomerated diene rubber and at the same time, a stable preparation of agglomerated rubber particles having a relatively uniform average particle size.

In order to prepare a desired graft copolymer (A) by using the latex-form agglomerated rubber particles (c) obtained by polymerization or agglomeration after polymerization, from 60 to 15 wt.% (100 wt.% in total with agglomerated rubber particles to have enlarged particle size) of (d) a monomer mixture composed of from 20 to 100 wt.% of an aromatic vinyl monomer and from 80 to 0 wt.% of another vinyl monomer in the presence of from 40 to 85 wt.% of the swollen rubber particles (c).

Examples of the aromatic vinyl monomer include styrene, vinyltoluene, vinylnaphthalene and α-methylstyrene. They may be used either singly or in combination of two or more of them. These aromatic vinyl monomers may be used, in the presence of the swollen rubber particles (c), in an amount of from 20 to 100 wt.%, preferably from 30 to 100 wt.%, more preferably from 40 to 100 wt.%, still more preferably from 40 to 99 wt.% based on the total amount of the monomer mixture to be polymerized. When the proportion of the aromatic vinyl monomer is less than 20 wt.%, the graft copolymer has insufficient affinity for the syndiotactic aromatic vinyl polymer, leading to poor dispersion of the graft copolymer upon melt processing and failure in giving satisfactory impact resistance. In addition, elongation ability might become insufficient even under low speed deformation and tend to break before yielding point. Thus, potential mechanical properties of the product tend to be insufficient.

Examples of the another vinyl monomer include, but not limited to, methacrylate esters such as methyl methacrylate, ethyl methacrylate, propyl methacrylate, butyl methacrylate, phenyl methacrylate, benzyl methacrylate, 2-hydroxyethyl methacrylate and glycidyl methacrylate, acrylate esters such as methyl acrylate, ethyl acrylate, propyl acrylate, butyl acrylate and 2-ethylhexyl acrylate, and vinyl cyanides such as acrylonitrile and methacrylonitrile. They may be used either singly or in combination of two or more of them. These monomers may be used in an amount of from 0 to 80 wt.%, preferably from 0 to 70 wt.%, more preferably from 0 to 60 wt.% based on the total amount of the monomers to be polymerized. Amounts of these monomers exceeding 80 wt.% tend to lead to insufficient affinity between the graft copolymer and the syndiotactic aromatic vinyl polymer. It is preferred to use, as the another vinyl monomer, at least one monomer selected from the group consisting of the above-described methacrylate esters, acrylate esters and vinyl cyanides in an amount of from 1 to 60 wt.% based on the total amount of the monomers.

### <Thermoplastic resin (B) composed mainly of an aromatic vinyl polymer having a syndiotactic structure>

The thermoplastic resin (B) composed mainly of an aromatic vinyl polymer having a syndiotactic structure used in the invention is a thermoplastic resin containing 50 wt.% or greater, preferably 70 wt.% or greater, more preferably from 90 to 100 wt.% of aromatic vinyl polymer which mainly have syndiotactic structure in the aromatic side chain and have a crystallizability resulting from this structure. When the amount of the aromatic vinyl polymer is less than 50 wt.%, the crystallizability inherent to the syndiotactic aromatic vinyl polymer is hindered, then it tends to cause deterioration in properties of the final product such as heat resistance or rigidity.

In this aromatic vinyl polymer, the stereostructure in the aromatic group side chain preferably has a syndiotacticity of 90% or greater, more preferably 95% or greater as diad. Syndiotacticities less than 90% tend to lead to lowering in crystallizability derived from the syndiotactic structure and, in turn, tend to deteriorate in properties such as impact resistance and rigidity.

Examples of the vinyl monomer containing aromatic ring used in the invention as a main component of the syndiotactic aromatic vinyl polymer constituting the thermoplastic resin (B) include styrene, aromatic ring-substituted styrenes such as vinyltoluene, chlorostyrene and bromostyrene, and vinyl-substituted styrenes such as α-methylstyrene. They may be used in an amount of 80 wt.% or greater, preferably from 90 to 100 wt.% in the syndiotactic aromatic vinyl polymer. Amounts of the aromatic vinyl monomer less than 80 wt.% may lead to lowering in the crystallizability inherent to the syndiotactic aromatic vinyl polymer and in turn, tend to deteriorate in the properties such as heat resistance and rigidity.

It is possible to use various thermoplastic polymers in combination with such a syndiotactic aromatic vinyl polymer in order to give various properties thereto within an extent not impairing the physical properties thereof. Examples of such a polymer include polyesters such as polyethylene terephthalate, polycarbonates such as bisphenol A polycarbonate, polyphenylene ethers typified by poly-2,6-dimethylphenylene oxide, modified polyolefin with functional group such as carboxil group, acrylic resins modified with functional group such as epoxy group or carboxyl group, styrenic polymers such as polystyrene, impact-resistant polystyrene, ABS resin, styrene-olefin copolymers, styrene-diene copolymers and styrene-olefin-diene copolymers, and modified polymers thereof with an epoxy or carboxyl group. These thermoplastic polymers should be used within an extent not impairing the crystallizability inherent to the syndiotactic aromatic vinyl polymer and properties derived therefrom such as heat resistance or rigidity. Use of it in an amount of 50 wt.% or less, preferably 30 wt.% or less based on the total amount of the thermoplastic resin (B) is usually preferred.

### <Impact-resistant thermoplastic resin composition>

For the preparation of the impact-resistant thermoplastic resin composition of the invention, the resin composition is prepared by melt mixing of from 5 to 50 parts by weight of the graft copolymer (A) obtained by emulsion polymerization of the vinyl monomer in the presense of the above-described agglomerated rubber particles and from 95 to 50 parts by weight of the thermoplastic resin (B) composed mainly of the syndiotactic aromatic resin. Preferably, amounts of the graft copolymer (A) and thermoplastic resin (B) are from 5 to 30 parts by weight and from 95 to 70 parts by weight, respectively. When the amount of the graft copolymer (A) is less than 5 parts by weight and that of the thermoplastic resin (B) exceeds 95 parts by weight, heat resistance of the final product tends to decrease. When the amount of the graft copolymer (A) exceeds 50 parts byweight and the amount of the thermoplastic resin (B) is below 50 parts by weight, on the other hand, the final product may fail to acquire properties inherent to the syndiotactic aromatic vinyl polymer such as heat resistance and rigidity.

Upon preparation of the resin composition of the invention, additives such as inorganic fillers, nucleating agents, antioxidants, flame retardants, antistatics, lubricants, pigments, or other additives can be added. Examples of the inorganic fillers include glass fibers, carbon fibers, mica, and mineral whiskers such as titanium dioxide and potassium titanate, calcium carbonate, clay and silica. Examples of the antioxidant include various ones such as hindered phenol, phosphite and thioether antioxidants. Examples of the flame retardant include various ones such as bromine compound, chroline compound, phosphorus compound, and silicon compound based flame retardants. Examples of the lubricant include various ones such as olefin and ester lubricants.

These additives can be used for enhancing the advantages of the syndiotactic aromatic vinyl polymer or within an extent not impairing them. Although the usual amount varies depending on the kind of the additives, they may be added preferably in an amount ranging from 0 to 100 parts by weight, more preferably from 0.01 to 100 parts by weight, still more preferably from 0.01 to 60 parts by weight, based on 100 parts by weight of the total amount of the graft copolymer (A) and the thermoplastic resin (B).

The melt mixed compound thus obtained is subjected to extrusion molding or injectionmolding or othermoldingprocess, whereby a molded or formed product can be obtained.

The compositions of the invention will next be described by Examples. However, the invention is not limited thereto.

### Example 1

### (1) Polymerization of butadiene-styrene rubber

In a 100-L pressure-resistant polymerization vessel were charged 200 parts by weight of water and 0.2 part by weight of potassium persulfate. The mixture was stirred, followed by sufficient nitrogen purging to eliminate oxygen. Sodium oleate 1 part by weight, 2 parts by weight of sodium rosinate, 75 parts by weight of butadiene and 25 parts by weight of styrene were charged and the temperature was raised to 60°C to initiate polymerization. It took 12 hours to complete the polymerization. The polymerization conversion ratio was 96%, while the rubber latex had an average particle size of 860 Å. Measurement of the average particle size including the below-described measurement was carried out using "Microtrack particle size analyzer Model 9230UPA", product of NIKKISO CO., Ltd.

### (2) Polymerization of acid-group-containing copolymer latex

In an 8-L polymerization vessel were charged 200 parts by weight of water and 0.5 part by weight of sodium dioctylsulfosuccinate and they were stirred. Under a nitrogen stream, the temperature of the resulting mixture was elevated to 70°C. Sodium formaldehyde sulfoxylate 0.3 part by weight, 0. 0025 part by weight of ferrous sulfate and 0.01 part by weight of ethylenediaminetetraacetic acid were charged to the vessel. After several minutes, a mixture of 2 parts by weight of butyl methacrylate, 23 parts by weight of butyl acrylate, 2 parts by weight of methacrylic acid, 0.125 part by weight of t-dodecyl mercaptan and 0. 025 part by weight of cumene hydroperoxide was added dropwise continuously at a rate of 20 parts by weight/hour by using a constant rate pump. After the addition of the above-described mixture and at the time when the polymerization conversion ratio reached 26.5 wt.% of the whole monomers used, a mixture of 58 parts by weight of butyl methacrylate, 2 parts by weight of butyl acrylate, 13 parts by weight of methacrylic acid, 0.3 part by weight of t-dodecyl mercaptan and 0.08 part by weight of cumene hydroperoxide was added dropwise similarly at a rate of 20 parts by weight/hour. One and a half hour after the completion of the dropwise addition, the polymerization was terminated. The polymerization conversion ratio was 99.7 wt.%, average particle size was 1050 Å, the solid content concentration was 33% and pH was 2.8.

### (3) Preparation of agglomerated rubber

In an 8-L polymerization vessel, 100 parts by weight (on solid basis) of the butadiene-styrene rubber prepared in the step (1) and 20 parts by weight of water were charged. While stirring, the resulting mixture was heated to 60°C under a nitrogen gas stream. To the reaction mixture were added 0.1 part by weight of sodium hydroxide and 3 parts by weight (on solidbasis) of the latex of the acid-group-containing copolymer polymerized in the step (2). Stirring was continued for 1 hour to agglomerate the butadiene-styrene rubber. After the addition of 200 parts by weight of water and 0.4 part by weight of sodium dodecylbenzenesulfonate, stirring was conducted for further 30 minutes to complete the agglomeration. As a result, an agglomerated butadiene rubber having an average particle size of 6600 Å was obtained.

### (4) Graft copolymerization of the agglomerated rubber

In an 8-L polymerization vessel was charged 70 parts by weight (on solid basis) of the butadiene-styrene agglomerated rubber obtained in the step (3). While stirring, the temperature was raised to 60°C under a nitrogen gas stream. Sodium formaldehyde sulfoxylate (0.18 part by weight), 0.001 part by weight of ferrous sulfate and 0.004 part by weight of ethylenediaminetetraacetic acid were added. 0.2 part by weight of t-butylhydroperoxide was added to 30 parts by weight of a monomer mixture composed of 12 parts by weight of methyl methacrylate and 18 parts by weight of styrene. Addition of this monomer mixture to the polymerization vessel was made dropwise continuously at a rate of 10 parts by weight/hour by using a constant rate pump. 0.2 part by weight of sodium dioctylsulfosuccinate was charged every one hour into the polymerization vessel during the addition of the monomer mixture, four times in total, in order to maintain the stability of the latex. After completion of the addition of the monomer mixture, stirring was conducted for further 1 hour to complete the polymerization. The polymerization conversion ratio was 96 wt.% and the average particle size of the latex was 7600 Å. After addition of each 0.5 part by weight of dilauryl-3,3'-thiodipropionate (DLTP) and 2,6-di-t-butyl-4-methylphenol (BHT) to the latex, 5 parts by weight of calcium chloride was added for coagulation. Coagulated latex are subjected ( 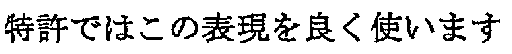 ) to heat treatment at 90°C, followed by dehydration and drying, dry powder was obtained.

### (5) Preparation of impact-resistant thermoplastic resin composition

With 20 wt.% of the graft copolymer prepared in the step (4) and 80 wt.% of a syndiotactic polystyrene resin ("QUESTRA QA102", product of Dow Chemical), 0.3 part by weight, based on 100 parts by weight of the graft copolymer and polystyrene resin, of a hindered phenol type stabilizer ("Irganox 1010", product of Ciba Specialty Chemicals) was mixed. The resulting mixture was extruded using a coaxial twin screw extruder "TEX44SS", product of Japan Steel Works, whereby pellets of the syndiotactic polystyrene resin composition were prepared. After injection molding of these pellets by 100B type injection molding machine(product of FANUC), into a bar of 126 × 12 × 6 mm in size, the bar was cut at both ends in the longitudinal direction, whereby test pieces of 63 × 12 × 6 mm in size for Izod impact test and tensile test were obtained. The test piece for Izod impact test was notched by a notching machine in accordance with ASTM D-256.

### (6) Evaluation of physical properties of the impact-resistant thermoplastic resin composition

The Izod impact strength of the molded product of the syndiotactic polystyrene resin composition prepared in the step (5) was measured in accordance with ASTM D-256 and based on the results, the impact resistance was evaluated. The heat deflection temperature (HDT) was measured in accordance with JIS K-7207A under a load of 18.6 kg, while the tensile yield strength was measured in accordance with JIS K-7113. These results are shown in Table 1.

### Example 2

In a similar manner to Example 1 except that styrene was not used and 100 parts by weight of butadiene was used in the step (1) of Example 1, a resin composition was prepared. The butadiene rubber thus obtained had a particle size of 780 Å and the agglomerated rubber had a particle size of 6900 Å. The results of the physical properties evaluated as in Example 1 are shown in Table 1 as those of Example 2.

### Example 3

In a similar manner to Example 1 except that 1.8 parts by weight (on solid basis) of the acid-group-containing copolymer latex was used in the step (3) of Example 1, a resin composition was prepared. The swollen rubber thus obtained had a particle size of 9700Å. Results of the physical properties evaluated as in Example 1 are shown in Table 1 as those of Example 3.

### Example 4

In an 8-L polymerization vessel were charged 200 parts by weight of water and 0.3 part by weight of sodium n-lauroylsarcosinate, followed by stirring. Under a nitrogen gas stream, the resulting mixture was heated to 60°C. To the reaction mixture were added 0.18 part by weight of sodium formaldehyde sulfoxylate, 0.001 part by weight of ferrous sulfate and 0.004 part by weight of ethylenediaminetetraacetic acid. Then, 5 parts by weight of butyl acrylate and 0.05 part by weight of allyl methacrylate were added. Several minutes later, 0.03 part by weight of cumene hydroperoxide was added. Thirty minutes later, 0.5 part by weight of sodium carbonate was added and then a mixture of 65 parts by weight of butyl acrylate, 0. 65 part by weight of allyl methacrylate, 0.6 part by weight of oleic acid and 0.15 part by weight of cumene hydroperoxide was continuously added dropwise through a constant rate pump at a rate of 20 parts by weight/hour. Twenty minutes after the completion of the addition of the mixture, 0.05 part by weight of cumene hydroperoxide was added and the mixture was stirred for 1 hour to complete the polymerization. The acrylic rubber particles thus obtained had a particle size of 900 Å.

The resulting rubber particles were agglomerated with the acid-group-containing copolymer latex as in Example 1. The agglomerated rubber latex thus obtained had a particle size of 4200 Å. Graft polymerization was performed as in Example 1, whereby a graft copolymer was obtained. To the copolymer latex thus obtained, 5 parts by weight of calcium chloride was added for coagulation. Coagulated latex are subjected to heat treatment at 90°C, followedby dehydration and drying, dry powder was obtained.
The physical properties of the resulting dry powders were evaluated as in Example 1 and the results are shown in Table 1 as those of Example 4.

### Comparative Example 1

In the presence of 70 parts by weight of the butadiene-styrene rubber obtained in the step (1) of Example 1, which had not been swollen with the acid-group-containing copolymer latex but added with 2.5 parts by weight of sodium sulfate, 12 parts by weight of methyl methacrylate and 18 parts by weight of styrene were polymerized, whereby a graft copolymer having an average particle size of 1900 Å was obtained. The physical properties of it were evaluated as in Example 1 and the results are shown in Table 1 as those of Comparative Example 1.

### Comparative Example 2

In the presence of 70 parts by weight of the butadiene-styrene rubber obtained in the step (1) of Example 1, 12 parts by weight of methyl methacrylate and 18 parts by weight of styrene were polymerized without swelling with the acid-group-containing copolymer latex, whereby a graft copolymer having a particle size of 1050 Å was obtained. The subsequent steps were performed in a similar manner to Example 1.

### Comparative Example 3

In a similar manner to Example 1 except that 27 parts by weight of methyl methacrylate and 3 parts by weight of styrene were polymerized in the graft copolymerization of the step (4) of Example 1, preparation of a graft copolymer and evaluation thereof were carried out.

### Comparative Example 4

### (1) Preparation of acrylate ester rubber and its graft copolymer

In an 8-L polymerization vessel were charged 200 parts by weight of water and 0.03 part by weight of sodium dioctylsulfosuccinate and the mixture was stirred. Under a nitrogen gas stream, the reaction mixture was heated to 75°C. Several minutes after the addition of 5 parts by weight of butyl acrylate and 0.04 part by weight of allyl methacrylate, 0.1 part by weight of potassium persulfate was added. Thirty minutes later, a mixture of 65 parts by weight of butyl acrylate, 0. 65 part by weight of allyl methacrylate and 0.4 part by weight of sodium dioctylsulfosuccinate was continuously added dropwise at a rate of 20 parts by weight/hour through a constant rate pump. After completion of the addition of the mixture, 0.05 part by weight of potassium persulfate was added. One hour later, a mixture of 10 parts by weight of styrene, 20 parts by weight of methyl methacrylate and 0.3 part by weight of sodium dioctylsulfosuccinate was similarly added dropwise at a rate of 20 parts by weight/hour. One and a half hour after the completion of the dropwise addition, the polymerization was terminated. The polymerization conversion ratio was 99.7 wt.%, average particle size was 4300 Å and solid concentration was 32%. Calcium chloride (5 parts by weight) was added to the latex for coagulation. Coagulated latex are subjected to heat treatment at 90°C, followed by dehydration and drying, drypowder was obtained.

### (2) Preparation of impact-resistant thermoplastic resin composition

In a similar manner to the step (5) of Example 1, test pieces for measuring Izod impact strength, heat deflection temperature and tensile yield strength were formed.

### (3) Evaluation of physical properties of impact-resistant thermoplastic resin composition

Physical properties of the resin composition were evaluated in a similar manner to the step (6) of Example 1 and results are shown in Table 1 as those of Comparative Example 4.

### Comparative Example 5

A commercially available core-shell type impact-resistant modifier ("EXL2330", product of Rohm & Haas, a very thin section cut out from the molded product had a particle size of 4000 Å as a result of observation through a transmission type electron microscope after the section was stained with osmium oxide, the rubber particles were not subjected to agglomeration with an acid-group-containing copolymer latex) having a butyl acrylate rubber - methyl methacrylate graft structure was used and its physical properties were evaluated as in Example 1. The results are shown in Table 1 as those of Comparative Example 5.

### Comparative Example 6

In a similar manner to Example 1 except that a syndiotactic polystyrene resin was used as was without adding thereto a graft copolymer, measurement was performed.

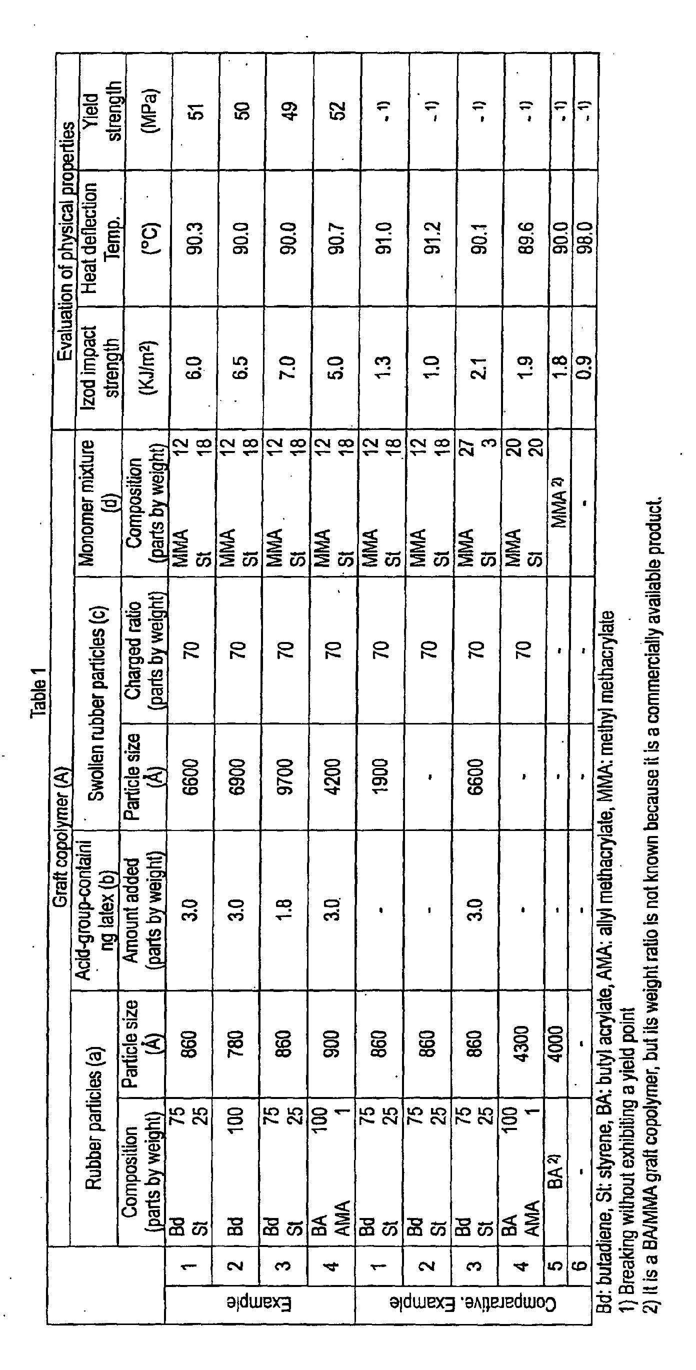

### INDUSTRIAL APPLICABILITY

According to the present invention, the impact-resistant thermoplastic resin of the invention can be obtained by adding, to a syndiotactic aromatic vinyl polymer, a graft copolymer onto the agglomerated rubber particles obtained by agglomerating rubber latex with an acid-group-containing copolymer latex. The molded product of it has impact resistance superior to that of the conventional products without losing heat resistance inherent to the syndiotactic aromatic vinyl polymer.

## Claims

1. An impact-resistant thermoplastic resin composition comprising from 5 to 50 parts by weight of (A) a graft copolymer and from 95 to 50 parts by weight of (B) a thermoplastic resin containing an aromatic vinyl polymer having a syndiotactic structure,
said graft copolymer (A) being obtained by polymerizing from 60 to 15 wt.% of (d) a monomer mixture containing from 20 to 100 wt.% of an aromatic vinyl monomer in the presence of from 40 to 85 wt.% of (c) latex-form rubber particles having an average particle size of from 3000 to 20000 Å obtained by agglomerating (a) latex-form rubber particles having an average particle size not greater than 3000 Å by adding thereto from 0.1 to 15 parts by weight (on solid basis) of (b) an acid-group-containing copolymer latex obtained by polymerizing a monomer mixture composed of from 5 to 25 wt. % of an unsaturated carboxylic acid and from 95 to 75 wt.% of a monomer copolymerizable with the unsaturated carboxylic acid, per 100 parts by weight (on solid basis) of the particles (a).

2. An impact-resistant thermoplastic resin composition of Claim 1, wherein the latex-form rubber particles (a) having an average particle size not greater than 3000 Å are latex-form rubber particles having an average particle size of from 500 to 3000 Å obtained by polymerizing a monomer mixture containing from 50 to 100 wt.% of at least one monomer selected from the group consisting of conjugated diene monomers and acrylic acid esters having a C₁₋₁₂ organic group.

3. An impact-resistant thermoplastic resin composition of Claim 1, wherein the acid-group-containing copolymer latex (b) is available by copolymerizing from 5 to 25 wt.% of at least one unsaturated carboxylic acid selected from the group consisting of acrylic acid, methacrylic acid, itaconic acid and crotonic acid and from 95 to 75 wt.% of a monomer copolymerizable with the unsaturated carboxylic acid.

4. An impact-resistant thermoplastic resin composition of Claim 1, wherein the monomer copolymerizable with the unsaturated carboxylic acid of the acid-group-containing copolymer latex (b) contains from 5 to 30 wt.% of an alkyl acrylate having a C₁₋₁₂ alkyl group, from 20 to 80 wt.% of an alkyl methacrylate having a C₁₋₁₂ alkyl group and from 0 to 40 wt.% of another vinyl monomer.

5. An impact-resistant thermoplastic resin composition of Claim 1, wherein the acid-group-containing copolymer latex (b) is obtained by polymerizing from 5 to 90 wt.% of (b-1) a monomermixture having a low unsaturated carboxylic acid content first and then polymerizing from 95 to 10 wt.% of (b-2) a monomer mixture having a high unsaturated carboxylic acid content.

6. An impact-resistant thermoplastic resin composition of Claim 1, wherein the monomer mixture (d) to be polymerized in the presence of the latex-form rubber particles (c) is composed of from 40 to 99 wt.% of an aromatic vinyl monomer and from 1 to 60 wt.% of at least one monomer selected from the group consisting of (meth) acrylate esters and vinyl cyanides.

7. An impact-resistant thermoplastic resin composition of Claim 1, wherein the thermoplastic resin (B) is a thermoplastic resin containing polystyrene having a syndiotactic structure.

8. An impact-resistant thermoplastic resin composition obtained by adding, to 100 parts by weight of an impact-resistant thermoplastic resin composition of Claim 1, from 0.01 to 100 parts by weight of at least one additive selected from the group consisting of inorganic fillers, nucleating agents, antioxidants, flame retardants, antistatics, lubricants and pigments.
